# EUROPEAN PATENT SPECIFICATION

(11) **EP 4 452 686 B1**
(45) Date of publication and mention of the grant of the patent: **13.05.2026**
(21) Application number: 22830319.4
(22) Date of filing: 15.12.2022
(51) Int. Cl.: B60L 13/06, B60L 13/08, B61B 13/08, E01B 25/30, E01B 25/32, H01F 7/02, B65G 54/02

(54) **METHOD OF TRANSFERRING A VEHICLE MODULE OVER AN INFRASTRUCTURE, INFRASTRUCTURE, VEHICLE MODULE AND USE THEREOF**
VERFAHREN ZUM TRANSPORT EINES FAHRZEUGMODULS ÜBER EINE INFRASTRUKTURE, INFRASTRUKTUR, FAHRZEUGMODUL UND DEESEN VERWENDUNG
PROCÉDÉ DE TRANSFERT D'UN MODULE DE VÉHICULE SUR UNE INFRASTRUCTURE, INFRASTRUCTURE, MODULE DE VÉHICULE ET UTILISATION

(30) Priority: 23.12.2021 NL 2030252
(43) Date of publication of application: 30.10.2024
(73) Proprietor: Stichting Radboud Universiteit, 6525 XZ Nijmegen (NL)
(72) Inventor: HUSSEY, Nigel Edward, 6525 XZ Nijmegen (NL)
(74) Representative: Patent Business B.V.
(86) International application number: PCT/NL2022/050720
(87) International publication number: WO 2023/121440

(56) References cited:
- EP-A1- 3 354 512
- WO-A1-01/66378
- WO-A1-03/003389
- WO-A1-2019/143469
- JP-A- 2002 238 109
- US-A1- 2010 236 445
- US-A1- 2018 223 481

## Description

### FIELD OF THE INVENTION

The present invention is in the field of a National Individual Floating Transport Infrastructure (NIfTI) wherein floating vehicles can travel by magnetic levitation and propagation. The vehicles can travel at a controllable height above the existing, albeit modified, road infrastructure and at relatively high speeds.

### BACKGROUND OF THE INVENTION

The present invention is in the field of individual transportation. Until now, cars based on the combustion engine have played an important role in transporting people. Recently, a transition towards partly or fully electrically driven cars has started, and further partly or fully self-driving vehicles are on their way to being developed. If a full transition towards electrically driven vehicles would take place, the energy demands on our power generation and distribution infrastructure would be enormous. Moreover, fatalities and injuries due to road accidents have remained roughly constant over the past two decades and even with the gradual introduction of autonomous vehicles, the design of modem cars, coupled with their weight, means that any collision with such a vehicle will likely lead to serious injury or even death. Finally, congestion due to our current infrastructure and the sheer volume of traffic represents a major economic and productivity cost to both developed and developing economies. Unfortunately, this is unlikely to change with the advent of the electric car.

In the search for an alternative means of transportation of passengers and freight, the magnetic levitation concept has been developed. The concept relates to a system conceived for train transportation. It uses two sets of magnets, a first set to lift the train up, and a second set to move the 'floating train" ahead. Since the train is floating, friction is virtually absent and the train can move at great speed. An advantage of this technology is the absence of moving parts. However, the train still needs to travel along a guideway of magnets which control the train's stability and speed, and in view of safety, movement of the train is limited to a direction of propagation. The trains can move fast and acceleration and deceleration is also much faster than e.g. for other vehicles such as conventional trains; safety and comfort are still points of attention. The power needed for levitation is relatively small, whereas air resistance and drag, especially at lower speeds, consume most energy. This could be overcome by moving vehicles in a vacuum environment. The construction of magnetic levitation systems is however relatively costly, though production and maintenance is cheaper, compared to high speed trains. Not many systems are in operation yet.

Some documents recite propagation of vehicles. JP 2002 238109 (A) recites a system for driving, propelling and controlling a small and lightweight car with a linear motor. Thereto magnetic coils for driving and propelling the car and permanent magnets are each provided at the ground side and at the vehicle side respectively. The coils are arranged in a linear state to the direction of movement, with each coil being wired in parallel with slip rails in a ladder state. US 3,815,511 (A) recites a magnetic propulsion and levitation system for a vehicle which is adapted to travel over an established roadbed. The system includes one or more superconducting magnets carried by the vehicle and a plurality of coils embedded in the roadbed in the path of travel of the vehicle. The coils are sequentially energized at a predetermined position relative to the superconducting magnet for establishing levitation and propulsion forces. It is noted that superconducting magnets typically require cooling to low temperatures. WO 2001/066378 A1 recites a transport system with a pair of levitating rails, and each of the levitating rails has a core with a plurality of coils extending circumferentially around each of the cores. The coils are perpendicular to the lengths of the levitating rails. Each of the levitating rails has an upper surface directly above the core. A vehicle has wheels that roll on the upper surfaces of the levitating rails in a nonlevitating position. The vehicle has a plurality of magnets that create magnetic fields that pass through the coils while the vehicle is moving along the levitating rails. The magnetic fields induce current, which in turn causes an opposing magnetic field that levitates the vehicle. A steering rail having a plurality of coils is mounted to at least one of the guideways. Permanent steering magnets are located on each side of the steering rail to magnetically steer the vehicle along the guideways. WO 2019/143469 A1 recites a magnetic levitation system includes a guideway and a vehicle. The guideway has ferromagnetic yokes and induction coils. The vehicle has levitation magnets for magnetic interaction with the ferromagnetic yokes wherein the vehicle levitates relative to the guideway. The vehicle has stabilization magnets coupled thereto for electromagnetic interaction with the induction coils as the vehicle travels along the guideway. Each stabilization magnet is a permanent magnet with a two-dimensional pattern of poles alternating in polarity in a first dimension and a second dimension. EP 3 354 512 A1 recites a magnetic suspension of a vehicle for an underpass with a ferromagnetic rail of an arbitrary cross section is proposed, which comprises permanent magnets and electromagnets mounted to be able to be attracted to a ferromagnetic rail. Permanent magnets are installed being arranged to control the force of attraction to the ferromagnetic rail. The position and / or mass of the permanent magnets can be adjusted before starting the movement under the weight of the vehicle and the transported load. Incidentally documents US 2010/236 445 A1, WO 2003/003389 A1, and US 2018/223481 A1, can be referred to.

The present invention relates to an improved floating vehicle and infrastructure, which overcomes one or more of the disadvantages with the above systems without jeopardizing functionality and advantages.

### SUMMARY OF THE INVENTION

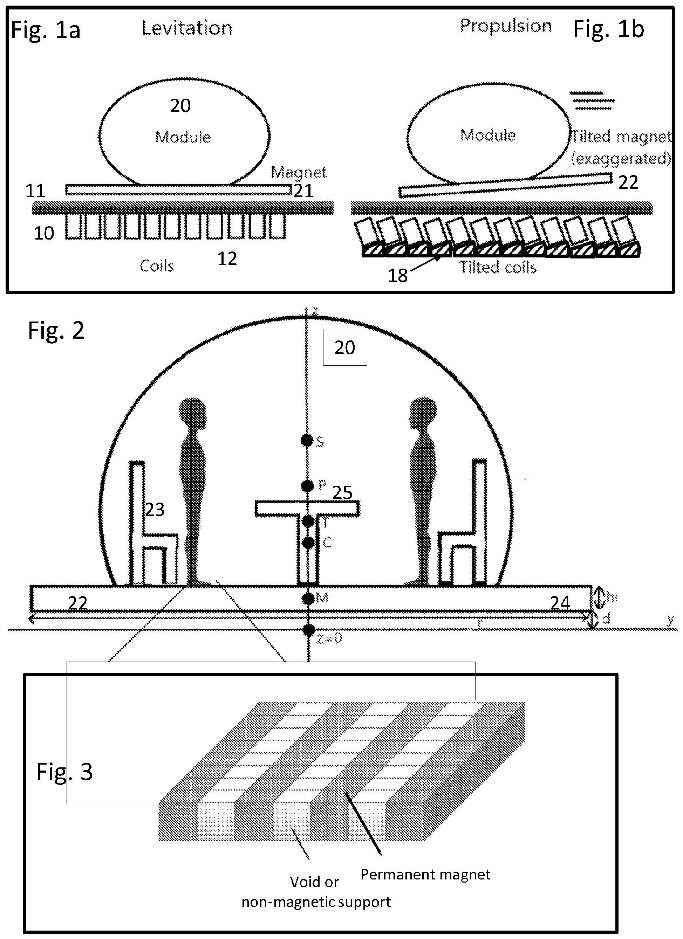

The present invention is defined in the appended claims and relates in a first aspect to a method of transferring an individual vehicle module over an infrastructure (NIfTI). Contrary to the above MagLev systems, which use onboard magnets and reaction magnets, the present system has coils embedded in its tracks. An advantage thereof is that no batteries are required, such as Li batteries; it is noted that Li is a relatively scarce material. Furthermore, no energy needs to be stored (save for the onboard sensing, interfacing and lighting), and hence no energy for storing and retracting is needed, and no energy is lost during storing and retracting. As the present vehicles can be stripped of virtually all mechanical and propagation components, their net weight is reduced to some 200-400 kg. As with MagLev systems, little friction is experienced during movement; however some magnetic drag may be present, which reaches a maximum at lower velocities (e.g. < 10m/sec). The present vehicle is a levitating vehicle with an on-board magnetic array and an off-board propulsion system that uses a series of pulses rather than a three-phase AC signal as used typically in linear motor devices. The arrangement of the magnet poles is also distinct. A sketch of NIFTI is given in figure 1a-b, which shows the pod at rest in the left panel and shows the principle of propulsion in the right panel. The present vehicle may comprise a carrier, such as a seat, or a wafer carrier. The exemplary vehicle in which the passengers are seated may have similar dimensions to a car. All seats may be pointed inwards. In the middle, a table may be provided. On this table a screen may be provided, on which the passengers can enter their destination or simply be entertained. The present vehicle is much lighter than (electric) cars and damage inflicted by collisions is therefore expected to be much less grave; still the vehicle is preferably made of an impact-resistant material and energy/shock absorbing zones are preferably provided. The present vehicle is also much cheaper, as only a small set of components need to be provided therein.

Levitation of the vehicle is achieved by the z-component of the magnetic field induced by the coils. In addition to the present coils, at least some of the coils may comprise a core of a permanent magnet; these permanent magnets may provide a magnetic vertical force equal to 10-98% of the empty weight of the present vehicle, preferably 20-50%, such as 30-40%, therewith contributing to the levitation force and reducing overall energy consumption in the coils without inducing forward motion. Initially, the magnet and hence the present vehicle module, lies flat on the track in which the coils are embedded, and some of the coils may be tilted with respect to the vertical. When the coils are energized, the vehicle will start to levitate at a certain height above the track, typically a few cm, and accelerate due to the horizontal gradients induced in the magnets. Stronger magnetic fields - created through additional coil windings and/or additional magnet inserts - may be installed on the end of each row of coils to make sure that the vehicle does not drift off the track itself. As the vehicle is moving, the coils only need to be energized for a short while during which the vehicle is forced forwards, and therefore can be pulsed. A response mechanism, provided by a controller, pulses the coils at the precise moment the pod is above them such that the vehicle maintains its speed. By placing the coils and permanent magnets strategically, the amount of current needed is found to be minimised. In order to further decrease the amount of energy required, conducting plates, e.g. aluminium plates, may be included as part of the tracks to allow the vehicle to glide over certain sections of road without the need for energized coils.

In the present method, an advanced infrastructure is provided. It is noted that said infrastructure may still largely coincide with an existing road infrastructure, e.g., in terms of routes, access to the infrastructure, tracks already provided, and so on. It is considered that especially when renovating existing infrastructure, the present infrastructure may be included in the existing infrastructure, at least partly. At least one individual track is provided, and typically a multitude of interconnected tracks may be provided. Each track comprises at least one series of coils, in particular a plurality of series of coils per track, wherein series of coils extend over the width of the track, so rows of coils are provided, each coil pointing upwards with or without a slight tilt. Therewith each series of coils is adapted to provide a levitational (vertical) magnetic force as well as a horizontal magnetic force. The horizontal magnetic force is directed along the length direction of the track. The centres of the coils are placed at distance from one another. In order to have active and inactive coils, at least one switch per series of coils is provided, and optionally at least one switch per coil, such that each individual coil can be energized. The switching technology may comprise transistors, such as MOSFETs. Each coil individually can be energized by an electrical current and de-energized. In order to keep the present vehicle on the track, and to prevent accidents, on at least one side of the track stronger magnetic fields may be provided, that is magnetic fields with a higher strength relative to a more central part of the track. The higher magnetic field strength may be provided by increasing the number of windings of the respective coils, such as 10-300% more windings, in particular 50-100% more windings. It is estimated that a force of up to 2400 N may be compensated as such, such as a force exerted by wind. Position location technology may also be provided on at least one side of the track . It is noted that the continuous motion of the vehicle overcomes Earnshaw's theorem, which states that a collection of point charges cannot be maintained in a stable stationary equilibrium configuration solely by the electrostatic interaction of the charges. When decelerating, the field gradient(s) may be reversed. When unexpected deceleration is required, such as in a case of an impending accident, the coils in the track will be energized with as large a current as possible. An additional braking mechanism may also be employed. Finally, an electrical power supply for providing an electrical current is present, which may be the grid, or a sub-grid.

The present vehicle is void of an engine, wheels, battery, suspension, steering wheel, etc. and has therefore a reduced weight, while maintenance thereof is very limited. The vehicle comprises an array of permanent magnets, preferably at a bottom side thereof. For the passengers, at least one seat is provided, or at least something for making a journey pleasant to a passenger. In view of the absence of an engine, much more space is available for passengers. The present module could therefore be relatively small. Typically more passengers could be present, and hence larger modules are considered, with e.g. 2-9 seats. In order for full control, the present vehicle module comprises an identifier, which may be used for controlling movement. As the passenger typically needs to identify a destination, a control interface may be present; however, existing infrastructure in this respect, such as smartphones, computers, the web, and so on may also be used.

When moving to a destination the present vehicle module is lifted, by providing a vertical component of the magnetic field and corresponding field gradient in the track at the location of the vehicle module. A horizontal component of the magnetic field is also provided, thereby enabling the module to be propelled at a certain speed in a horizontal direction over the track. Once the destination is reached, or in other occasions, the horizontal magnetic field is cancelled and/or an opposite magnetic field in the track may be provided, thereby decelerating the module and bringing the module to a stop. At the same time, the vertical magnetic field in the track may be cancelled, thereby letting the module down onto the track.

Advantages of the present invention are therefore an infrastructure with all the freedom of the car, but without the car itself, use of the existing road network, wherein the road becomes the engine, thereby removing most of the weight from the "vehicle", wherein magnetic repulsion is used for both levitation and propulsion, and an optional on-board interface for receiving instructions. The time spent in transit is entirely one's own. With sufficient attention, it is considered possible to achieve an energy consumption that is less than that of an electric car. With a mass < ¼ that of an electric car and a streamlined shape, traffic mortalities are reduced, and since all traffic would be controlled by a central operating system, congestion may be prevented. The sense of ownership moves from the car to the infrastructure, and mobility for all people is provided, for any age, for any disability, and so on.

In a second aspect, the present invention relates to the above mentioned infrastructure, and in a third aspect to the above mentioned vehicle module.

In a further aspect the present invention relates to a series of coils of the present infrastructure, wherein, in the series of coils, coils are adjacent to one and another, and wherein each coil individually has an oblong shape with a width (w) and a length (l), in particular wherein the length is more than two times larger than the width, more in particular more than four times large than the width, such as 5-10 times as large as the width, wherein the length of each individual coil may be 10-100% of a width of the present infrastructure, wherein a height of each individual coil may be 1-25 cm, preferably 1.5-10 cm, such as 2-5 cm, wherein each coil individually may comprise a magnetic core or not, wherein each coil individually may comprise windings that are curved at one or more sides thereof.

Thereby the present invention provides a solution to one or more of the above mentioned problems.

Advantages of the present invention are detailed throughout the description.

### DETAILED DESCRIPTION OF THE INVENTION

The present invention relates in a first aspect to a method of transferring a vehicle module over an infrastructure according to claim 1. A preliminary study on boundary conditions for the present system is given in a BSc thesis of A. Kool, RU Nijmegen (Introducing a new mode of transport: NIfTI as an alternative to the electric car.), whose contents are incorporated by reference thereto. Further, more advanced studies were given in the theses of S. ten Napel, RU Nijmegen (Simulations of the magnetic field profiles for a magnet array associated with levitated transport) and K. Shirkoohi, University of Bristol (Simulating the analytical dynamics of the novel NIfTI magnetic levitation transport device).

In an exemplary embodiment of the present method in an inclined section of the track at least one series of coils is tilted over an angle α in a direction of the inclination, in particular wherein α is 0.5-2 times an inclination angle.

In an exemplary embodiment of the present method in a left or right curved section of the track at least one series of coils is tilted inwards over an angle β, in particular wherein β is 0-30 degrees with respect to a horizontal plane, more in particular wherein β is 2-15 degrees.

In an exemplary embodiment of the present method at a junction of tracks at least one series of coils comprises a magnetic insert, such as a magnetic core, wherein the magnetic insert is adapted to move in a direction perpendicular to a surface of the track, in particular through automation, thereby providing a positive or negative magnetic gradient in a direction of one of the tracks, in particular wherein the magnetic gradient is 50-200% relative to the levitational magnetic force.

In an exemplary embodiment of the present method on a straight part of the track, based on a location of the vehicle module, at least one controller is adapted to energize coils directly behind the vehicle module 10-50% more than the coils underneath the vehicle module, and/or at least one controller is adapted to energize coils directly in front of the vehicle module 1-10% less than coils underneath the vehicle module, relative to a direction of movement of the vehicle module.

In an exemplary embodiment of the present method, at least once, two series of coils may be interrupted by a metallic (i.e. an electrically conducting) plate, wherein the conducting plate extends in a longitudinal direction and width direction of the track.

In an exemplary embodiment of the present method, at least one permanent magnet is inserted into the bore of individual coils within a series of coils.

It has been found that therewith energy consumption can be reduced by more than 50%.

It is noted that at higher speeds, energy consumption may be reduced relative to lower speeds due to a reduction in (magnetic) drag and in the pulse duration within the coils.

In an exemplary embodiment of the present method, each series of coils may comprise each individually, at least one coil and/or part thereof which may or may not be slightly tilted, with respect to a vertical axis, (depending on whether the track includes an incline or not). On an incline, the coils may be tilted relative to the perpendicular (normal) to the surface of the track, such as tilted 0.5-40°, preferably 2-30°, more preferably 5-20°. Therewith both a horizontal and vertical magnetic force may be provided to the present vehicle module.

In an exemplary embodiment of the present method, coils, typically series of coils, each individually, may have their respective centres separated by a distance of 5-50 cm, such as 5-20 cm, which distance is typically in the direction of movement. The coils may be provided adjacent to one and another, with substantially no distance between them, or with a small distance between them, such as a distance of 0.2-10 cm.

In an exemplary embodiment of the present method, a track has a width of 0.6-3 m, such as 1.0-2.5 m, or a track has a width of 0.05-0.3 m, and a vehicle module has a width of 0.03-0.4 m, and a vehicle module has a length of 0.05-0.4 m, and an empty vehicle module has a weight of 0.05-2 kg, such as 0.1-0.5 kg, or a track has a width of 0.1-1.5 m, and a vehicle module has a width of 0.1-1 m, and a vehicle module has a length of 0.1-1 m, and an empty vehicle module has a weight of 4-50 kg, such as 10-25 kg. These tracks are therefore smaller then typically used tracks. As such more tracks per existing infrastructure may be provided. Part of the tracks may be especially adapted, being a bit broader, for the transport of goods, such as in intermodal containers of a width of slightly less than 2.5 m, especially on tracks for transport over long distances.

In an exemplary embodiment of the present method, a vehicle module has a width of 0.6-3 m, preferably 1-1.5 m.

In an exemplary embodiment of the present method, a vehicle module has a length of 0.6-3 m, preferably 1-1.5 m.

In an exemplary embodiment of the present method an empty vehicle module has a weight of 150-750 kg, such as 200-300 kg. The vehicle is relatively light, especially in comparison to existing vehicles, and are in fact comparable to the weight of motor cycles.

In an exemplary embodiment of the present method, at least two vehicle modules may be connectable. In view of transportation and limiting a number of movements such may be an advantage.

In an exemplary embodiment of the present method, a coil, each individually, may have a length 1-60 cm, preferably 2-40 cm, such as 10-30 cm. Such coils are found to provide sufficient magnetic forces.

In an exemplary embodiment of the present method, a coil, each individually, may have a radius of 1-20 cm, preferably 2-10 cm, more preferably 3-5 cm.

In an exemplary embodiment of the present method, the coil former, each individually, may have a thickness of 0.1-10cm, preferably 0.2-5 cm, more preferably 1-3 cm.

In an exemplary embodiment of the present method, a coil, each individually, may have a number of windings n_{c}∈[1,10000]/m, preferably 10-5000, more preferably 50-2500, such as 100-500.

In an exemplary embodiment of the present method, a coil, each individually, may comprise an electrically conducting material, such as a metal, such as copper or aluminium.

In an exemplary embodiment of the present method, a series of coils may be adapted to provide a magnetic field Bz of 10⁻³-10¹ [T], preferably 2*10⁻³-2 [T], more preferably 3*10⁻³-10⁻¹ [T].

In an exemplary embodiment of the present method, over a width of a track 1-100/m coils in series may be provided.

In an exemplary embodiment of the present method, the respective centres of two series of coils may be separated by a distance of 5-20 cm.

In an exemplary embodiment of the present method, a magnet may comprise high magnetic density materials.

In an exemplary embodiment of the present method, a magnet may comprise at least one magnetic material selected from Group 3-12, Period 4-6 elements, such as Fe, Co, Ni, and Nd, and combinations thereof comprising such a magnetic material, such as Nd₂Fe₁₄B, FePd, FeCo, and FePt, and/or a material selected from lanthanoids, scandium, yttrium, and combinations thereof, such as from Sc, Y, Sm, Gd, Dy, Ho, Er, Yb, Tb, such as Tb.

In an exemplary embodiment of the present method, a magnet has a volumetric susceptibility of 10³⁻10⁶, such as 10³⁻3*10⁵.

In an exemplary embodiment of the present method, each coil individually may be adapted to receive a current of 0.5-200 [A], preferably 1-100 [A], such as 5-50 [A].

In an exemplary embodiment of the present method, a switch may be adapted to switch within 1000 µsec, preferably within 100 µsec.

In an exemplary embodiment of the present method, each coil may be adapted to be energized within 1-10⁵ µsec.

In an exemplary embodiment of the present method, each coil may be energized in a pulsed mode, such as in pulses of 1-100 msec, wherein preferably a length of a pulse is adapted to the speed of the vehicle module.

In an exemplary embodiment of the present method, the speed of the vehicle module may be from 0-150 m/sec, preferably from 0-75 m/sec, more preferably from 0-40 m/sec, such as 5-30 m/sec.

In an exemplary embodiment of the present method, the vehicle module may comprise an array of i∈[1,p] magnets with the same field orientation arranged in a strip-like manner, whereby strips of magnets (aligned in the direction of motion) are spatially separated in the direction perpendicular to the direction of motion. The strips are typically located parallel to a direction of movement, i.e. parallel to the track(see Fig. 3). An advantage of using a spatially separated strip arrangement for the magnets is that the total amount of magnet is reduced, thereby reducing the overall weight of the vehicle module, while at the same time, maximising the levitation force. The electrical current in a row of coils required to levitate and propel the module will accordingly be minimised.

In an exemplary embodiment of the present method, 10-100% of the bottom of the vehicles may be provided with magnets,
magnets have a height of 1-25 cm, preferably 1.5-10 cm, such as 2-5 cm. It is found that in view of forces the weight of magnets is preferably not too small.

In an exemplary embodiment of the present method, a length of all magnets may be 20-200 cm; preferably 40-120 cm, such as 45-100 cm, and there with a substantial part of the bottom of the vehicle may be provided with magnets.

In an exemplary embodiment of the present method, magnets may be provided above or below a bottom of the vehicle, preferably below a bottom.

In an exemplary embodiment of the present method, a total volume of magnets may be 0.1*10⁻³-50*10⁻³ m³.

In an exemplary embodiment of the present method, a magnetic moment may be 0.1-2000 Am², preferably 1-500 Am².

In an exemplary embodiment of the present method, coils may provide an acceleration/deceleration of 0.01-10 m/sec², preferably 0.2-5 m/sec². This relatively low acceleration will still bring vehicle modules up to a decent speed in a short period of time, and to high speeds in acceptable times as well.

In an exemplary embodiment of the present method, an additional braking mechanism may provide a deceleration of 1-20 m/sec², preferably 2-10 m/sec².

In an exemplary embodiment of the present method, the vehicle module may comprise a base with an array of [1,p]*j∈[1,o] magnets with the same field orientation, such as arranged in a strip-like manner, whereby strips of magnets (aligned in the direction of motion) are spatially separated in the direction perpendicular to the direction of motion. The number of strips p will equal the number of coils in a single row (less the coils used to create the magnetic valley) and their width will be preferably 30-90% of the diameter of the coils, such as 40-70%, and o is preferably from 2-10³, such as 5-100.

In an exemplary embodiment of the present method, the controller may be adapted to control hovering of the vehicle module.

In an exemplary embodiment of the present method, a multitude of vehicle modules may be transferred, such as millions of vehicles. Clearly control of movement and operating tracks would involve lots of computing time, but nowadays that is not much of an issue.

In an exemplary embodiment of the present method, the infrastructure may be partly or fully incorporated into an existing infrastructure, wherein at least one track, each individually, is covered by a protecting layer, such as a 0.2-5 cm thick polymeric layer, preferably a recycled polymeric layer. For instance a bicycle path adjacent to the present track may be made entirely out of recycled plastic bottles, having a 30-40 year life span (c.f. 15 years for tarmac), and having virtually no CO₂ emissions. Similar thereto, there is no need for tarmac with NIfTI. Hence, such paths could be the surface covering for NIfTI too.

In an exemplary embodiment of the present method, the infrastructure may comprise a set of coils at the end(s) of each row with additional windings and magnet inserts thereby creating a magnetic 'valley' to prevent the vehicle module from leaving the track.

In an exemplary embodiment of the present method, the infrastructure may comprise position detection technology and if required, an additional magnetic braking system. In an exemplary embodiment of the present method, the vehicle module may be a monocoque, wherein the vehicle module preferably comprises at least one composite.

In an exemplary embodiment of the present method, a drag coefficient of the vehicle C_{D}<0.3, preferably C_{D}<0.2, such as 0.05<C_{D}<0.13, such as a droplet shaped vehicle. With the present vehicle modules much more freedom in design is obtained, as virtually no parts are present. Room for optimization in this (and other) aspects is therefore provided.

In an exemplary embodiment of the present method, the vertical magnetic field is applied to the centre of mass of the magnetic base, and/or wherein the horizontal magnetic field is applied to the same centre of mass.

In an exemplary embodiment of the present method, the vehicle module impact on collision may be minimized, for instance such that pedestrians would be deflected instead of hit square on.

In an exemplary embodiment of the present method, the track may be banked at an angle, preferably 0.1-30°, such as 1-10°, to enable a vehicle to navigate a curve in the track.

In an exemplary embodiment of the present method, at a junction of tracks, magnet inserts may be allowed to move vertically inside of the coils, through automation, to create an effective banking of the magnetic force lines and enable a vehicle to turn sharply left or right.

In an exemplary embodiment, the present infrastructure may comprise a hollow tube-like structure, such as under the road, wherein a surface of the tube-like structure comprises a polymeric material, such as a plastic, such as a recycled plastic, wherein the surface is preferably removable attached, wherein in the tube-like structure coil receiving elements are provided, such as a rack with coils. Therewith the present infrastructure can be operated with ease, is constructed in a low tech manner, and can be maintained well.

In an exemplary embodiment the present vehicle module may comprise an array of permanent magnets, preferably at a bottom side thereof, at least one seat, preferably 2-9 seats, such as 3-4 seats, an identifier, and an optional control interface.

The present vehicle module and infrastructure may be used in the present method.

The invention is further detailed by the accompanying figures and examples, which are exemplary and explanatory of nature and are not limiting the scope of the invention. To the person skilled in the art it may be clear that many variants, being obvious may be conceivable falling within the scope of protection, defined by the present claims.

### SUMMARY OF FIGURES

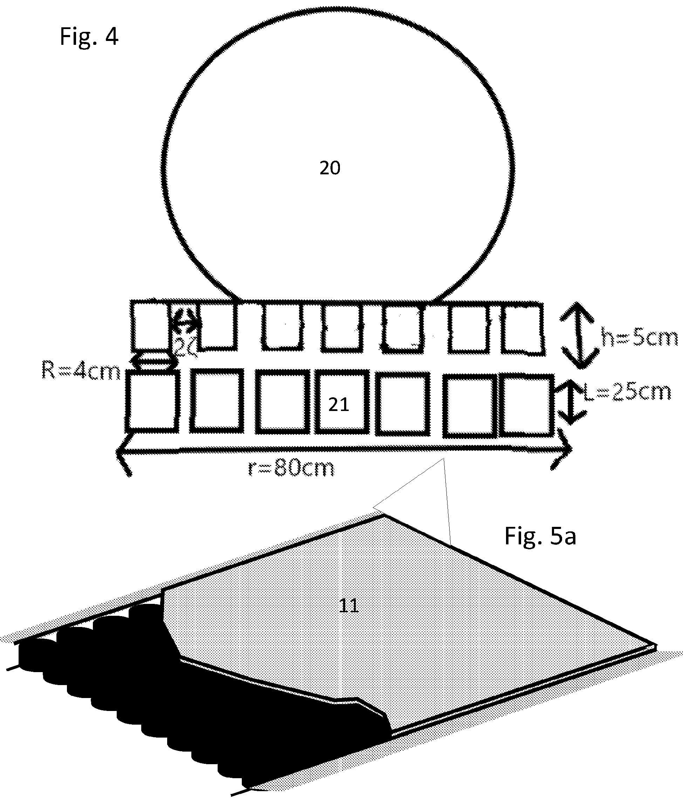

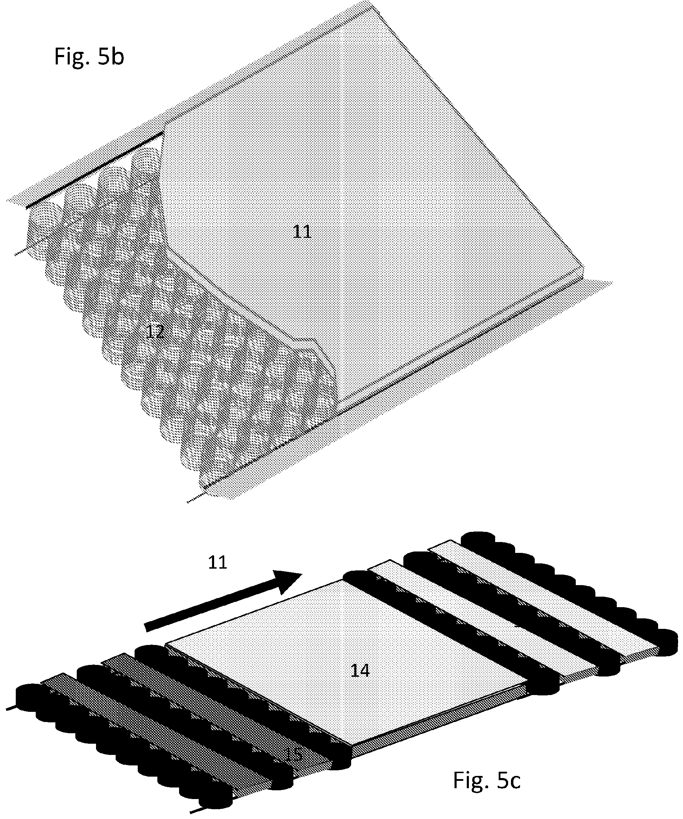

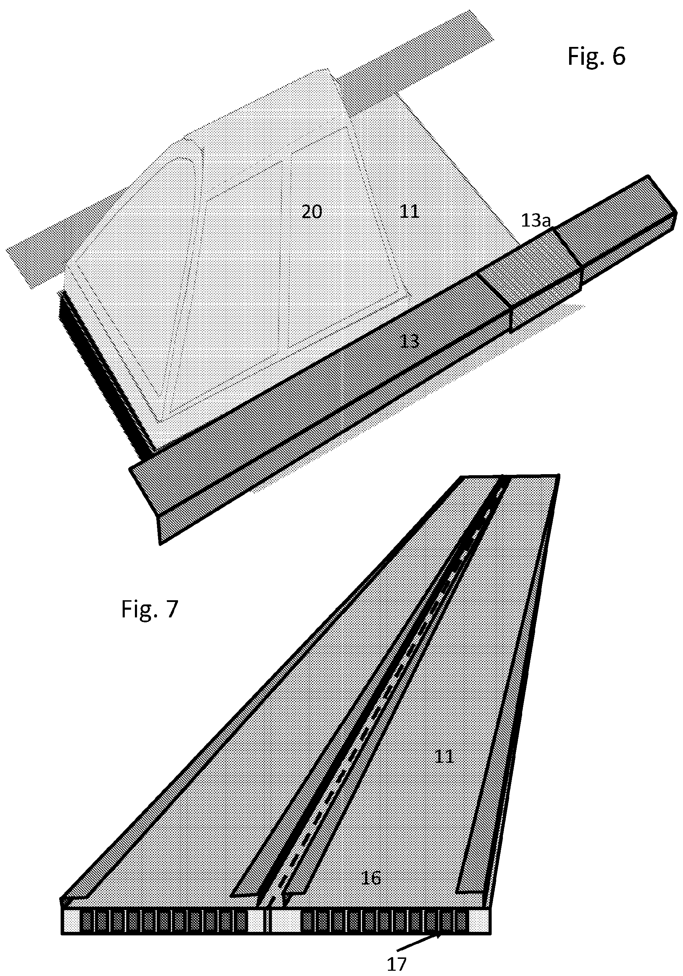

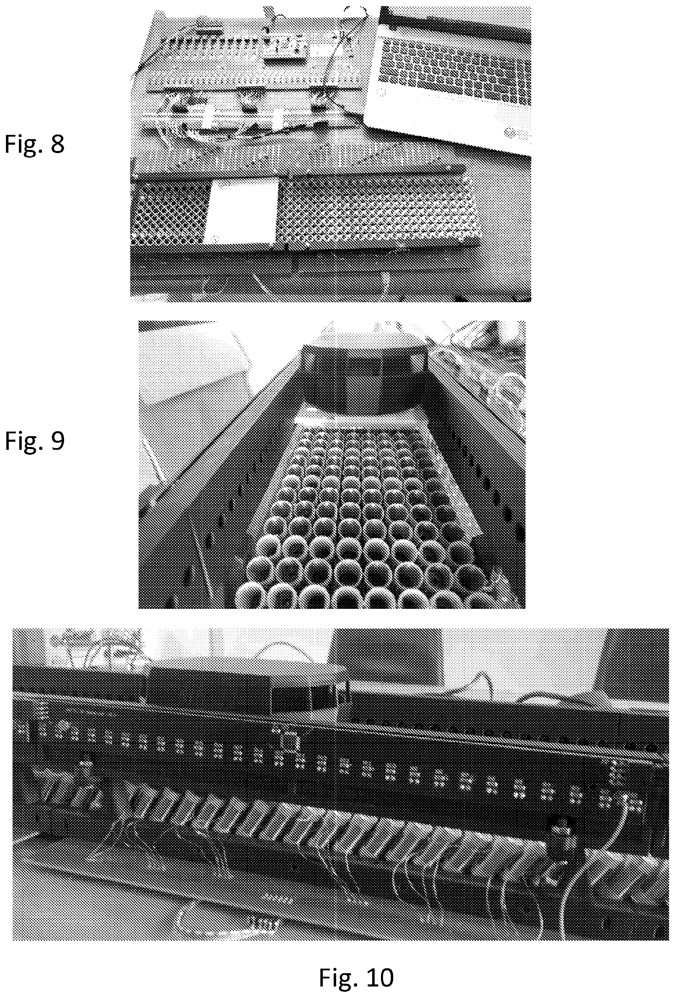

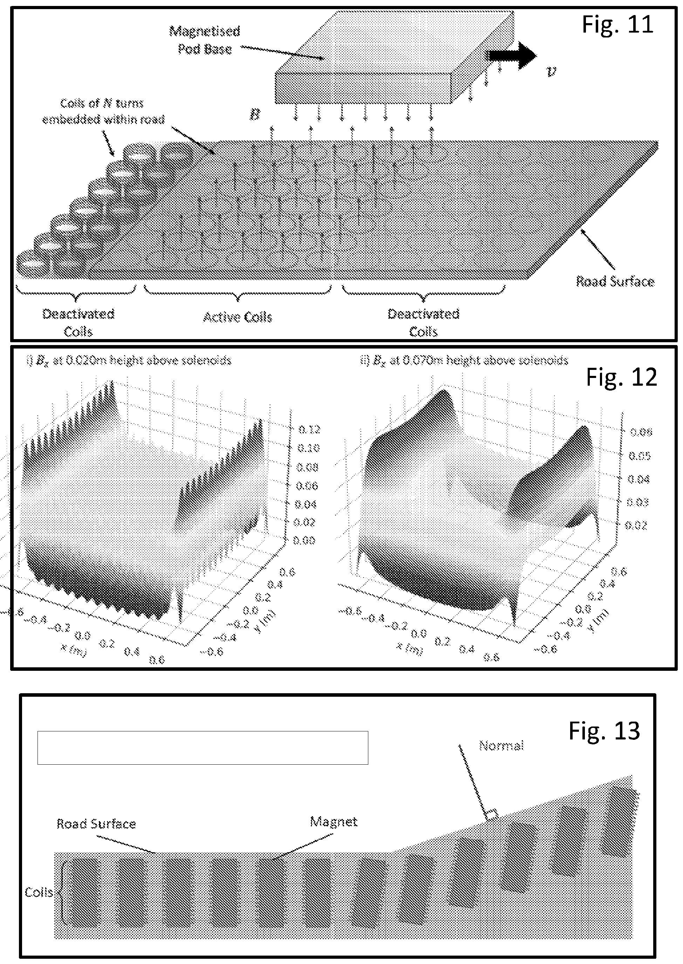

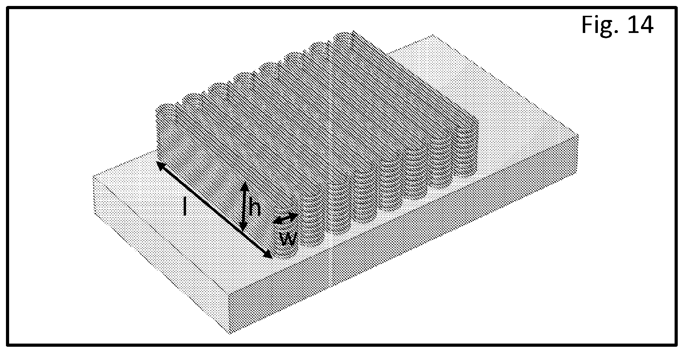

Figures 1a,b, 2-4, 5a-c, and 6-14 show details of the present invention.

### DETAILED DESCRIPTION OF FIGURES

Figure 1: A raw sketch of a first version of NIfTI. The left panel 1a shows the vehicle 20 at rest comprising magnets 21 in a bottom side 22 thereof, levitating above its track 11 with coils 12. The right panel 1b shows the vehicle moving to the left, with a general sketch of the propulsion system. A rack 18 is provided for receiving the coils in a tilted position.
Figure 2: A sketch of the cross section of the pod 20. In the middle is the table 25, on the sides there are two passengers. For clarity of the sketch, persons 2 and 4 are not included. In the picture, M is the centre of mass of the magnet, T is the centre of mass of the table, P is the net centre of mass of the people, C is the net centre of mass of the chairs and S is the centre of mass of the pod itself. The point z = 0 is at the top of the coils, h_{f} below the middle of the magnet. A typical mass of a vehicle, including four passengers is calculated to be some 500-600 kg. Seats 23, bottom 22, and identifier 24 are also indicated.
Figure 3 shows an enlargement of a part of the magnet array 21 provided in the vehicle module, with its spatial arrangement of magnetic strips.
Figure 4: A sketch of the vehicle 20 with a base of magnetic strips instead of an entire magnet. This view can be seen as a front of behind view on the pod, since the strips are in the direction of motion.
Figures 5a-b show a part of track 11 with series of coils 12 provided underneath the track. Figure 5c further shows conducting plate 14, and permanent magnets 15 provided in the track.
Figure 6 shows an artist impression of the present vehicle module 20 moving over track 11, with guiders 13 provided at sides thereof, which guiders are sub-divided in sections 13a.
Figure 7 shows an artist impression of the present track 11, projected over a bicycle lane, with hollow tube 17 and protective layer 16.
Figure 8 shows a section of track of the current prototype with a magnetic array sitting on top as well as some of the control electronics.
Figure 9 shows an end-on view of the completed track with the NIfTI module floating above the array of coils.
Figure 10 shows a side view of the prototype highlighting the tilted coil arrangement and the LED position detectors.
Figure 11: Diagram showing the function of the 'pulsed' coils which propel the pod. The active coils are at least the length of two coils behind the front of the pod, and at least two coils behind the pod. This creates a strong magnetic field gradient in Bz which causes the pod to propel forward. A similar mechanism is used in order to brake the motion of the pod.
Figure 12: Surface plots relative to position above the surface of 16x16 array of solenoids (Scale B). Magnets at the centre of the track have a radius of 0.035m. The two rows in y at the either edge of the track have a radius of 0.050m, hence produce a strong magnetic valley. At low heights, the gradient in B_{z} is large hence the restoring force of the valley is effective.
Figure 13 shows a schematic example of tilting coils over an angle α at an inclined section of a track.
Fig. 14 shows an example of oblong coils.

The figures are further detailed in the description.

### EXAMPLES/EXPERIMENTS

The invention although described in detailed explanatory context may be best understood in conjunction with the accompanying examples of present small-scale prototypes and figures as detailed above.

For the prototype, 123 rows of coils, each consisting of 8 coils wired in series, is used. The arrangements of the magnets in the base of the pod comprise a Halbach array, such in which the magnetic field polarity flips 90 degrees with each next magnet going from left to right. This means that for every 2 magnets the direction of the magnetic field is inverted. A width of each coil is twice that of one magnet cube, in order to ensure that they always have an opposing polarity with the magnet exactly above it. This is done by having the direction of the current running through the coils flip from one coil to the next.

The coils used in this prototype have an outer diameter of 10.7 mm, an inner diameter of 9 mm and a height of 26.3 mm. The wire for the coils has a diameter of 0.25 mm. The coils each have 100 turns. The distance between the center of two coils is 12 mm.

Six pieces of track were joined together to house 128 rows of coils all of which are tilted 30° with respect to the vertical. Each row has 8 pins that are used to keep the coils steady and in place. In two of the 8 coils in each row, a small disc-shaped magnet is inserted in the bottom to provide additional levitation force. Finally, for each part of the track a guiding rail is also added, housing LED position detectors.

The electronic control board is designed such that it can power any row individually. In total 144 coil rows can be connected to the control board.

More details on this first NIfTI prototype can be found in the MSc theses of T. van Wolfswinkel, RU Nijmegen (The Development and testing of NIfTI prototype Mk.V).

Returning to a full-scale infrastructure, some exemplary qualifications and quantifications are given below.
1. The mass of the entire vehicle with passengers is about 600 kg, and without passengers it is about 250-300 kg. This is much less mass than an electric car. The transport module optimally has the form of a flattened sphere or of an ellipsoid.
2. The magnet is a square plate magnet with height 0.03 m and sides 1.0 m divided into 10 strips of width 0.06 m. The mass of the magnet is 160 kg. For the purposes of calculating the magnetic force necessary for levitation, only the centre of mass of the magnet array is required.
3. With these parameters, the necessary current turns out to be between 10 A and 30 A. This is the most important parameter for determining the total energy consumption. 4. The diameter of the coils is 10 cm, their height is 25 cm and they have 125 windings. The wire is made of copper with resistivity ρ = 2·10⁻⁸ Ωm and diameter of 2 mm. There are a total of 10 coils in each series.
5. The effective magnetization of the magnet is µ₀M = 2 T.
6. The density is ρ = 5000 kg/m³.

To compare NIfTI with an electric car, motion along a track of 10km is discussed. An electric car uses about 34kWh per 100 miles, which is about 7.606·10⁶J per 10km. It is assumed that the entirety of the 10km track contains rows of coils. There are then 10⁴/d rows of coils. I = 20 A, N = 125, ρ = 2·10⁻⁸ Ωm and d = 0.1 m. The typical diameter of a copper wire is r = 1 mm. It remains to determine Δt. Assuming the pod moves at a velocity of 16 m/s results in Δt = 0.06 s. When part of the track is void of coils, such as 20-60% thereof, and small permanent magnets are inserted into the cores of all or some of the coils, an according reduction of energy use is obtained (factor of 1.5-5, such as 2). An energy consumption would then be about 50-100% of that of an electric car. In addition, costs of operation, including maintenance, depreciation, and so one, are a factor lower as well; in an estimate a factor 3 lower.

In conclusion the present system of human transport is a self-driving module which is propelled by a system of coils interacting with an on-board magnet. The vehicle can run on 10-30 A and can reach the usual velocities of a car. Furthermore, it possesses some major benefits with respect to either traditional cars or electric cars. It uses about 50-100% of the energy of an electric car and costs about 30% of the amount of money that goes into an electric car. Furthermore, it provides environmental and ethical benefits with respect to the traditional ways of human transport.

## Claims

1. A method of transferring a vehicle module over an infrastructure, comprising
providing said infrastructure (10), wherein the infrastructure comprises
at least one individual track (11), in particular a multitude of interconnected tracks, wherein each track comprises at least one series of coils (12), in particular a plurality of series of coils, wherein series of coils extend in the direction of the width of the track, wherein each series of coils is adapted to provide a levitational magnetic force wherein coils are placed at a distance from one another, at least one switch per series of coils, wherein each coil individually can be energized by an electrical current and de-energized, wherein each coil is adapted to be energized in a pulsed mode, wherein on at least one side of the track side coils are provided adapted to provide a larger magnetic field than central coils at a central part of the track, such as wherein the side coils have an increased number of windings compared to the central coils, or wherein the side coils comprise a magnetic insert,
at least one controller for energizing individual coils such that at a side of the track a larger magnetic field is provided than at a central part of the track,
optionally a vehicle module track-position locator,
an electrical power supply for providing an electrical current,
providing said vehicle module (20), wherein said vehicle module comprises an array of permanent magnets (21), preferably at a bottom side (22) thereof, optionally at least one seat (23), an identifier (24), and an optional control interface(25),
providing a vertical magnetic field in the track at a location of the vehicle module, thereby lifting the module,
providing a horizontal magnetic field in the track at a changing location of the vehicle module, thereby hovering the module at a certain speed in a horizontal direction over the track,
providing an opposite magnetic field in the track preferably controlling the horizontal magnetic field, such as by controlling respective side coils and central coils, thereby decelerating the module, and
cancelling the vertical magnetic field in the track thereby letting the module down to the track.

2. The method according to claim 1, wherein in an inclined section of the track at least one series of coils is tilted over an angle α in a direction of the inclination, in particular wherein α is 0.5-2 times an inclination angle, and/or
wherein in a left or right curved section of the track at least one series of coils is tilted inwards over an angle β, in particular wherein β is 0-30 degrees with respect to a horizontal plane, more in particular wherein β is 2-15 degrees.

3. The method according to any of claims 1-2, wherein at a junction of tracks at least one series of coils comprises a magnetic insert, such as a magnetic core, wherein the magnetic insert is adapted to move in a direction perpendicular to a surface of the track, in particular through automation, thereby providing a positive or negative magnetic gradient in a direction of one of the tracks, in particular wherein the magnetic gradient is 50-200% relative to the levitational magnetic force.

4. The method according to any of claims 1-3, wherein on a straight part of the track, based on a location of the vehicle module, at least one controller is adapted to energize coils directly behind the vehicle module 10-50% more than the coils underneath the vehicle module, and/or
at least one controller is adapted to energize coils directly in front of the vehicle module 1-10% less than coils underneath the vehicle module,
relative to a direction of movement of the vehicle module.

5. The method according to any of claims 1-4, wherein at least once two series of coils are interrupted by at least one of an electrically conducting plate (14) and permanent magnet plate (15), wherein the plate extends in a longitudinal direction and width direction of the track, and/or
wherein each series of coils is located below a surface of the track, and/or wherein at least one coil and/or part thereof may or may not be tilted with respect to a perpendicular of the surface of the track, such as tilted 0-40°, preferably 2-30°, more preferably 5-20°.

6. The method according to any of claims 1-5, comprising a feature selected from series of coils whose respective centres are separated by a mutual distance of 1 -50 cm,
a track has a width of 0.6-3 m, and a vehicle module has a width of 0.6-3 m, and a vehicle module has a length of 0.6-3 m, and an empty vehicle module has a weight of 150-750 kg, such as 200-300 kg, or
a track has a width of 0.05-0.3 m, and a vehicle module has a width of 0.03-0.4 m, and a vehicle module has a length of 0.05-0.4 m, and an empty vehicle module has a weight of 0.05-2 kg, such as 0.1-0.5 kg, or
a track has a width of 0.1-1.5 m, and a vehicle module has a width of 0.1-1 m, and a vehicle module has a length of 0.1-1 m, and an empty vehicle module has a weight of 4-50 kg, such as 10-25 kg,
at least two vehicle modules are connectable,
a coil, each individually, has a length 1-60 cm, preferably 2-40 cm, such as 10-30 cm,
a coil, each individually, has a radius of 1-20 cm, preferably 2-10 cm, more preferably 3-6 cm,
a coil, each individually, has a thickness of 0.1-10cm, preferably 0.2-5 cm, more preferably 1-3 cm,
a coil, each individually, has a number of windings n_{c}∈[1,10000]/m, preferably 10-5000, more preferably 50-2500, such as 100-500,
a coil, each individually, comprises an electrically conducting material, such as a metal, such as copper or aluminium,
a series of coils is adapted to provide a magnetic field Bz of 10⁻³-10¹ [T], preferably 5*10⁻³-2 [T], more preferably 10⁻²-10⁻¹ [T],
over a width of a track 1-100/m coils in series are provided,
two series of coils are separated by a respective centre distance of 1-20 cm,
a magnet comprises high magnetic density materials,
a magnet comprises at least one magnetic material selected from Group 3-12, Period 4-6 elements, such as Fe, Co, Ni, and Nd, and combinations thereof comprising such a magnetic material, such as Nd₂Fe₁₄B, FePd, FeCo, and FePt, and/or a material selected from lanthanoids, scandium, yttrium, and combinations thereof, such as from Sc, Y, Sm, Gd, Dy, Ho, Er, Yb, Tb, such as Tb,
each coil individually is adapted to receive a current of 0.5-200 [A], preferably 1-100 [A], such as 5-50 [A], wherein a switch is adapted to switch within 1000 µsec, preferably within 100 µsec,
at least one switch per individual coil or per row of coils, and wherein each coil is adapted to be energized within 1-10⁵ µsec, and combinations thereof, and/or
wherein each coil or row of coils is energized in pulses with a duration of 1-100 msec, wherein preferably a length of a pulse is adapted to the speed of the vehicle module, and/or
wherein the speed of the vehicle module is from 0-150 m/sec, preferably from 0-75 m/sec, more preferably from 0-40 m/sec, such as 5-30 m/sec.

7. The method according to any of claims 1-6, wherein at least one of the vehicle module comprises an array of i∈[1,p] magnets with the same field orientation, such as arranged in a strip-like manner, typically whereby strips of magnets are aligned in a direction of motion and are spatially separated in a direction perpendicular to the direction of motion,50-100% of the bottom of the vehicle is provided with magnets,
magnets have a height of 1-25 cm, preferably 1.5-10 cm, such as 2-5 cm,
a length of all magnets is 20-200 cm; preferably 40-120 cm, such as 45-100 cm,
wherein magnets are provided above or below the bottom of the vehicle, preferably below the bottom,
wherein a total volume of magnets is 0.1*10⁻³-100*10⁻³ m³, wherein a magnetic moment is 0.1-2000 Am²,
wherein coils provide an acceleration/deceleration of 0.01-10 m/sec², preferably 0.2-5 m/sec², and
wherein an additional braking mechanism provides a deceleration of 1-20 m/sec², preferably 2-10 m/sec².

8. The method according to any of claims 1-7, wherein vehicle module (20) comprises a base with magnetic strips, wherein a number of magnetic strips p is equal to a number of coils in a single row and the coil width is preferably 30-90% of a respective diameter of the coil, such as 40-70%, and/or
wherein a magnet has a volumetric susceptibility of 10³⁻10⁶.

9. The method according to any of claims 1-8, wherein the controller is adapted to control hovering and propagation of the vehicle module, and/or
wherein a multitude of vehicle modules is transferred, and/or
wherein the infrastructure is partly or fully incorporated in an existing infrastructure, wherein at least one track, each individually, is covered by a protecting layer (16), such as a 0.2-5 cm thick polymeric layer, preferably a recycled polymeric layer.

10. The method according to any of claims 1-9, wherein the infrastructure comprises physical and/or controllable guiders (13), such as a rail, and guidance coils, wherein guidance coils may be oriented accordingly.

11. The method according to any of claims 1-10, wherein the vehicle module is a monocoque, wherein the vehicle module preferably comprises at least one composite, and/or
wherein a drag coefficient of the vehicle C_{D}<0.3, preferably C_{D}<0.2, such as 0.05<C_{D}<0.13, such as a droplet shaped vehicle, and/or
wherein a vehicle module impact on collision is minimized.

12. An infrastructure (10) for a method according to any of claims 1-11, comprising
at least one individual track (11), wherein each track comprises at least one series of coils (12), wherein series of coils extend in the direction of the width of the track, wherein each series of coils is adapted to provide a levitational magnetic force and a horizontal magnetic force, wherein the horizontal magnetic force is directed along the length direction of the track, wherein coils are placed at a distance from one another, at least one switch per series of coils, wherein each coil individually can be energized by an electrical current and de-energized, wherein on at least one side of the track side coils are provided adapted to provide a larger magnetic field then central coils at a central part of the track, such as wherein the side coils have an increased number of windings compared to the central coils, or wherein the side coils comprise a magnetic insert,
a controller for energizing individual coils such that at a side of the track a larger magnetic field is provided than at a central part of the track,
optionally a vehicle module track-position locator, and
an electrical power supply for providing an electrical current,
in particular an indoor infrastructure, such as a logistics infrastructure, or a toy race track, a toy train track, or a wafer transporter, or an outdoor infrastructure, in particular further comprising at least one in-frastructural element as mentioned in claims 2-11.

13. The infrastructure according to claim 12, comprising a hollow tube-like structure (17) under the road, wherein a surface of the tube-like structure comprises a polymeric material (16), such as a plastic, such as a recycled plastic, wherein the surface is preferably removable attached, wherein in the tube-like structure coil receiving elements (18) are provided, such as a rack with tilted coil positions.

14. A vehicle module (20) for a method according to any of claims 1-11, wherein said vehicle module comprises an array of permanent magnets (21), preferably at the bottom side (22) thereof, optionally at least one seat (23), preferably 2-9 seats, such as 3-4 seats, an identifier (24), and an optional control interface (25), in particular further comprising at least one vehicle element as mentioned in claims 2-11.

15. A series of coils of the infrastructure of any of claims 12-13, wherein, in the series of coils, coils are adjacent to one and another, and wherein each coil individually has an oblong shape with a width (w) and a length (l), in particular wherein the length is more than two times larger than the width.

## Patentansprüche

1. Ein Verfahren nach zur Übertragung eines Fahrzeugmoduls über eine Infrastruktur, umfassend
Bereitstellung der Infrastruktur (10), wobei die Infrastruktur
mindestens eine einzelne Schiene (11), insbesondere eine Vielzahl miteinander verbundener Schienen, wobei jede Schiene mindestens eine Reihe von Spulen (12), insbesondere eine Vielzahl von Reihen von Spulen, umfasst, wobei sich die Reihen von Spulen in Richtung der Breite der Schiene erstrecken, wobei jede Reihe von Spulen dazu ausgelegt ist, eine magnetische Auftriebskraft zu erzeugen, wobei die Spulen in einem Abstand voneinander angeordnet sind, mindestens eine Weiche pro Reihe von Spulen, wobei jede Spule einzeln durch einen elektrischen Strom erregt und-abgeschaltet werden kann, wobei jede Spule so ausgelegt ist, dass sie im Impulsbetrieb erregt werden kann, wobei auf mindestens einer Seite der Schiene Seitenspulen vorgesehen sind, die so ausgelegt sind, dass sie ein größeres Magnetfeld erzeugen als die mittleren Spulen in einem mittleren Teil der Schiene, beispielsweise indem die Seitenspulen eine erhöhte Anzahl von Windungen im Vergleich zu den mittleren Spulen aufweisen oder indem die Seitenspulen einen magnetischen Einsatz umfassen,
mindestens eine Steuereinheit zum Erregen einzelner Spulen, so dass an einer Seite der Schiene ein größeres Magnetfeld bereitgestellt wird als an einem mittleren Abschnitt der Schiene,
optional einen Fahrbahnpositionsdetektor für ein Fahrzeugmodul,
eine Stromversorgung zur Bereitstellung eines elektrischen Stroms für das Fahrzeugmodul (20),
Bereitstellung des Fahrzeugmoduls (20), wobei das Fahrzeugmodul eine Anordnung von Permanentmagneten (21) umfasst, vorzugsweise an dessen Unterseite (22), optional mindestens einen Sitz (23), einen Identifikator (24) und eine optionale Steuerschnittstelle (25),
Bereitstellen eines vertikalen Magnetfelds in der Schiene an einer Position des Fahrzeugmoduls, wodurch das Modul angehoben wird,
ein horizontales Magnetfeld in der Schiene an einer sich ändernden Position des Fahrzeugmoduls bereitstellt, wodurch das Modul mit einer bestimmten Geschwindigkeit in horizontaler Richtung über der Schiene schwebt,
Bereitstellen eines entgegengesetzten Magnetfelds in der Schiene, vorzugsweise durch Steuerung des horizontalen Magnetfelds, beispielsweise durch Steuerung entsprechender Seitenspulen und Mittelspulen, wodurch das Modul abgebremst wird, und
das vertikale Magnetfeld in der Schiene aufheben, wodurch das Modul auf die Schiene abgesenkt wird.

2. Verfahren nach Anspruch 1, wobei in einem geneigten Abschnitt der Schiene mindestens eine Spulenreihe um einen Winkel α in Richtung der Neigung geneigt ist, insbesondere wobei α das 0,5- bis 2-fache eines Neigungswinkels beträgt, und/oder
wobei in einem links- oder rechtskurvigen Abschnitt der Schiene mindestens eine Spulenreihe um einen Winkel β nach innen geneigt ist, insbesondere wobei β 0-30 Grad in Bezug auf eine horizontale Ebene beträgt, insbesondere wobei β 2-15 Grad beträgt.

3. Verfahren nach einem der Ansprüche 1-2, wobei an einer Gleiskreuzung mindestens eine Spulenreihe einen magnetischen Einsatz, wie beispielsweise einen Magnetkern, umfasst, wobei der magnetische Einsatz so ausgelegt ist, dass er sich in einer Richtung senkrecht zu einer Oberfläche des Gleises bewegt, insbesondere durch Automatisierung, wodurch ein positiver oder negativer magnetischer Gradient in Richtung eines der Gleise erzeugt wird, insbesondere wobei der magnetische Gradient 50-200 % relativ zur magnetischen Schwebekraft beträgt.

4. Verfahren nach einem der Ansprüche 1 bis 3, wobei auf einem geraden Abschnitt der Schiene, basierend auf einem Positions us des Fahrzeugmoduls, mindestens eine Steuerung so ausgelegt ist, dass sie Spulen direkt hinter dem Fahrzeugmodul um 10 bis 50 % stärker anregt als die Spulen unterhalb des Fahrzeugmoduls, und/oder
mindestens eine Steuerung so ausgelegt ist, dass sie Spulen direkt vor dem Fahrzeugmodul um 1-10 % weniger als Spulen unterhalb des Fahrzeugmoduls mit Strom versorgt,
relativ zu einer Bewegungsrichtung des Fahrzeugmoduls.

5. Verfahren nach einem der Ansprüche 1-4, wobei mindestens einmal zwei Spulenreihen durch mindestens eine elektrisch leitende Platte (14) und/oder eine Permanentmagnetplatte (15) unterbrochen sind, wobei sich die Platte in Längsrichtung und Breitenrichtung der Schiene erstreckt, und/oder
wobei jede Spulenreihe unterhalb einer Oberfläche der Schiene angeordnet ist, und/oder wobei mindestens eine Spule und/oder ein Teil davon in Bezug auf eine Senkrechte zur Oberfläche der Schiene geneigt sein kann oder nicht, beispielsweise um 0-40°, vorzugsweise um 2-30°, noch bevorzugter um 5-20°.

6. Verfahren nach einem der Ansprüche 1 bis 5, mit einem Merkmal, das ausgewählt ist aus einer Reihe von Spulen, deren jeweilige Mittelpunkte einen gegenseitigen Abstand von 1-50 cm aufweisen,
eine Schiene eine Breite von 0,6-3 m aufweist und ein Fahrzeugmodul eine Breite von 0,6-3 m aufweist und ein Fahrzeugmodul eine Länge von 0,6-3 m aufweist und ein leeres Fahrzeugmodul ein Gewicht von 150-750 kg, beispielsweise 200-300 kg, aufweist, oder
eine Schiene eine Breite von 0,05-0,3 m aufweist, und ein Fahrzeugmodul eine Breite von 0,03-0,4 m aufweist, und ein Fahrzeugmodul eine Länge von 0,05-0,4 m aufweist, und ein leeres Fahrzeugmodul ein Gewicht von 0,05-2 kg aufweist, beispielsweise 0,1-0,5 kg, oder
eine Schiene eine Breite von 0,1-1,5 m aufweist, und ein Fahrzeugmodul eine Breite von 0,1-1 m aufweist, und ein Fahrzeugmodul eine Länge von 0,1-1 m aufweist, und ein leeres Fahrzeugmodul ein Gewicht von 4-50 kg aufweist, beispielsweise 10-25 kg,
mindestens zwei Fahrzeugmodule miteinander verbunden werden können,
jede Spule einzeln eine Länge von 1-60 cm, vorzugsweise 2-40 cm, beispielsweise 10-30 cm, aufweist, jede Spule einzeln einen Radius von 1-20 cm, vorzugsweise 2-10 cm, noch bevorzugter 3-6 cm, aufweist,
jede Spule einzeln eine Dicke von 0,1-10 cm, vorzugsweise 0,2-5 cm, noch bevorzugter 1-3 cm, aufweist,
jede einzelne Spule eine Anzahl von Windungen von n_{c}∈ [1,10000]/m aufweist, vorzugsweise 10-5000, noch bevorzugter 50-2500, beispielsweise 100-500,
jede Spule besteht aus einem elektrisch leitenden Material, wie beispielsweise einem Metall, wie Kupfer oder Aluminium,
eine Reihe von Spulen ist so ausgelegt, dass sie ein Magnetfeld Bz von 10⁻³-10¹ [T] erzeugt, vorzugsweise 5*10⁻³-2 [T], noch bevorzugter 10⁻²-10⁻¹ [T],
über eine Breite der Schiene sind 1-100/m Spulen in Reihe angeordnet,
zwei Reihen von Spulen sind durch einen jeweiligen Mittenabstand von 1-20 cm voneinander getrennt, ein Magnet umfasst Materialien mit hoher magnetischer Dichte,
ein Magnet umfasst mindestens ein magnetisches Material, ausgewählt aus Elementen der Gruppen 3-12, Perioden 4-6, wie Fe, Co, Ni und Nd, sowie Kombinationen davon, die ein solches magnetisches Material umfassen, wie z. B. Nd₂ Fe₁₄ B, FePd, FeCo und FePt, und/oder ein Material, ausgewählt aus Lanthanoiden, Scandium, Yttrium und Kombinationen davon, wie beispielsweise aus Sc, Y, Sm, Gd, Dy, Ho, Er, Yb, Tb, wie beispielsweise Tb,
jede Spule einzeln dafür ausgelegt ist, einen Strom von 0,5-200 [A], vorzugsweise 1-100 [A], wie beispielsweise 5-50 [A], aufzunehmen, wobei ein Schalter dafür ausgelegt ist, innerhalb von 1000 µs, vorzugsweise innerhalb von 100 µs,
mindestens ein Schalter pro einzelner Spule oder pro Spulenreihe, und wobei jede Spule so ausgelegt ist, dass sie innerhalb von 1-10⁵µs erregt wird, sowie Kombinationen davon, und/oder
wobei jede Spule oder Spulenreihe in Impulsen mit einer Dauer von 1-100 ms erregt wird, wobei vorzugsweise die Impulslänge an die Geschwindigkeit des Fahrzeugmoduls angepasst ist, und/oder
wobei die Geschwindigkeit des Fahrzeugmoduls zwischen 0 und 150 m/s, vorzugsweise zwischen 0 und 75 m/s, noch bevorzugter zwischen 0 und 40 m/s, beispielsweise zwischen 5 und 30 m/s, liegt.

7. Verfahren nach einem der Ansprüche 1-6, wobei mindestens eines der Fahrzeugmodule eine Anordnung von i∈ [1,p] Magneten mit derselben Feldausrichtung umfasst, beispielsweise streifenförmig angeordnet, wobei typischerweise Magnetstreifen in einer Bewegungsrichtung ausgerichtet und in einer Richtung senkrecht zur Bewegungsrichtung räumlich voneinander getrennt sind,50-100 % der Unterseite des Fahrzeugs mit Magneten versehen sind,
Die Magnete haben eine Höhe von 1-25 cm, vorzugsweise 1,5-10 cm, beispielsweise 2-5 cm,
die Länge aller Magnete beträgt 20-200 cm; vorzugsweise 40-120 cm, beispielsweise 45-100 cm,
wobei die Magnete oberhalb oder unterhalb des Fahrzeugbodens, vorzugsweise unterhalb des Fahrzeugbodens, angeordnet sind,
wobei das Gesamtvolumen der Magnete 0.1*10⁻³-100*10⁻³ m³ beträgt, wobei das magnetische Moment 0.1-2000 Am² beträgt,
wobei Spulen eine Beschleunigung/Verzögerung von 0,01-10 ^{m/}s², vorzugsweise 0,2-5 m/s², bewirken, und
wobei ein zusätzlicher Bremsmechanismus eine Verzögerung von 1-20 m/s², vorzugsweise 2-10 m/s², bereitstellt.

8. Verfahren nach einem der Ansprüche 1-7, wobei das Fahrzeugmodul (20) eine Basis mit Magnetstreifen umfasst, wobei die Anzahl der Magnetstreifen p gleich der Anzahl der Spulen in einer einzelnen Reihe ist und die Spulenbreite vorzugsweise 30-90 % des jeweiligen Durchmessers der Spule beträgt, beispielsweise 40-70 %, und/oder
wobei ein Magnet eine volumetrische Suszeptibilität von 10³⁻10^{6⁶}aufweist.

9. Verfahren nach einem der Ansprüche 1-8, wobei die Steuerung dazu ausgelegt ist, das Schweben und die Fortbewegung des Fahrzeugmoduls zu steuern, und/oder
wobei eine Vielzahl von Fahrzeugmodulen befördert wird, und/oder
wobei die Infrastruktur teilweise oder vollständig in eine bestehende Infrastruktur integriert ist, wobei mindestens eine Schiene jeweils einzeln von einer Schutzschicht (16) bedeckt ist, beispielsweise einer 0,2-5 cm dicken Polymerschicht, vorzugsweise einer recycelten Polymerschicht.

10. Verfahren nach einem der Ansprüche 1-9, wobei die Infrastruktur physische und/oder steuerbare Führungselemente (13), wie beispielsweise eine Schiene, und Führungsspulen umfasst, wobei die Führungsspulen entsprechend ausgerichtet sein können.

11. Verfahren nach einem der Ansprüche 1-10, wobei das Fahrzeugmodul eine Monocoque-Konstruktion ist, wobei das Fahrzeugmodul vorzugsweise mindestens einen Verbundwerkstoff umfasst, und/oder
wobei ein Luftwiderstandsbeiwert des Fahrzeugs C_{D}<0,3, vorzugsweise C_{D}<0,2, beispielsweise 0,05 < C_{D}< 0,13, wie beispielsweise ein tropfenförmiges Fahrzeug, und/oder
wobei der Aufprall des Fahrzeugmoduls bei einer Kollision minimiert wird.

12. Eine Infrastruktur (10) für ein Verfahren gemäß einem der Ansprüche 1-11, umfassend
mindestens eine einzelne Schiene (11), wobei jede Schiene mindestens eine Reihe von Spulen (12) umfasst, wobei sich die Reihen von Spulen in Richtung der Breite der Schiene erstrecken, wobei jede Reihe von Spulen dazu ausgelegt ist, eine magnetische Auftriebskraft und eine horizontale Magnetkraft bereitzustellen, wobei die horizontale Magnetkraft entlang der Längsrichtung der Schiene gerichtet ist, wobei die Spulen in einem Abstand voneinander angeordnet sind, mindestens einen Schalter pro Spulenreihe, wobei jede Spule einzeln durch einen elektrischen Strom erregt und entregt werden kann, wobei auf mindestens einer Seite der Bahn Seitenspulen vorgesehen sind, die so ausgelegt sind, dass sie ein größeres Magnetfeld erzeugen als die mittleren Spulen in einem mittleren Teil der Bahn, beispielsweise indem die Seitenspulen eine erhöhte Anzahl von Windungen im Vergleich zu den mittleren Spulen aufweisen, oder indem die Seitenspulen einen magnetischen Einsatz umfassen,
eine Steuereinheit zum Erregen einzelner Spulen, so dass an einer Seite der Schiene ein stärkeres Magnetfeld erzeugt wird als im mittleren Bereich der Schiene,
optional einen Fahrzeugmodul-Schienenpositionsdetektor und
eine Stromversorgung zur Bereitstellung von elektrischem Strom,
insbesondere eine Inneninfrastruktur, wie beispielsweise eine Logistikinfrastruktur, oder eine Spielzeugrennbahn, eine Spielzeugeisenbahnstrecke oder einen Wafertransporter, oder eine Außeninfrastruktur, insbesondere ferner umfassend mindestens ein in den Ansprüchen 2-11 genanntes Infrastrukturelement.

13. Infrastruktur nach Anspruch 12, umfassend eine hohlrohrartige Struktur (17) unter der Straße, wobei eine Oberfläche der rohrartigen Struktur ein polymeres Material (16), wie beispielsweise einen Kunststoff, insbesondere einen recycelten Kunststoff, umfasst, wobei die Oberfläche vorzugsweise abnehmbar befestigt ist, wobei in der rohrartigen Struktur Spulenaufnahmeelemente (18) vorgesehen sind, wie beispielsweise eine Zahnstange mit geneigten Spulenpositionen.

14. Ein Fahrzeugmodul (20) für ein Verfahren gemäß einem der Ansprüche 1-11, wobei das Fahrzeugmodul eine Anordnung von Permanentmagneten (21), vorzugsweise an seiner Unterseite (22), optional mindestens einen Sitz (23), vorzugsweise 2-9 Sitze, wie beispielsweise 3-4 Sitze, einen Identifikator (24), und eine optionale Steuerschnittstelle (25), umfasst, insbesondere
das ferner mindestens ein Fahrzeugelement gemäß den Ansprüchen 2-11 umfasst.

15. Eine Reihe von Spulen für die Infrastruktur nach einem der Ansprüche 12-13, wobei in der Reihe von Spulen, die Spulen nebeneinander angeordnet sind, und wobei jede Spule einzeln eine längliche Form mit einer Breite (w) und einer Länge (l) aufweist, insbesondere wobei die Länge mehr als doppelt so groß ist wie die Breite.

## Revendications

1. Un procédé consistant à transférer par un module de véhicule sur une infrastructure, comprenant
la mise à disposition de ladite infrastructure (10), dans laquelle l'infrastructure comprend
au moins une voie individuelle (11), en particulier une multitude de voies interconnectées, dans lequel chaque voie comprend au moins une série de bobines (12), en particulier une pluralité de séries de bobines, dans lequel les séries de bobines s'étendent dans le sens de la largeur de la voie, dans lequel chaque série de bobines est adaptée pour fournir une force magnétique de lévitation, dans lequel les bobines sont placées à distance les unes des autres, au moins un commutateur par série de bobines, dans lequel chaque bobine peut être alimentée individuellement par un courant électrique et désactivée, chaque bobine étant adaptée pour être alimentée en mode pulsé, dans lequel, sur au moins un côté de la piste, des bobines latérales sont prévues, adaptées pour fournir un champ magnétique plus important que les bobines centrales situées dans une partie centrale de la piste, par exemple dans lequel les bobines latérales ont un nombre accru d'enroulements par rapport aux bobines centrales, ou dans lequel les bobines latérales comprennent un insert magnétique,
au moins un contrôleur pour alimenter les bobines individuelles de telle sorte qu'un champ magnétique plus important soit fourni sur un côté de la voie qu'au niveau d'une partie centrale de la voie,
éventuellement un localisateur de position de la voie pour le module du véhicule,
une alimentation électrique pour fournir un courant électrique,
fournissant ledit module de véhicule (20), dans lequel ledit module de véhicule comprend un réseau d'aimants permanents (21), de préférence sur sa face inférieure (22), éventuellement au moins un siège (23), un identifiant (24) et une interface de commande optionnelle (25),
générer un champ magnétique vertical dans la voie à l'emplacement du module de véhicule, soulevant ainsi le module,
fournir un champ magnétique horizontal dans la voie à un emplacement variable du module de véhicule, faisant ainsi flotter le module à une certaine vitesse dans une direction horizontale au-dessus de la voie,
générer un champ magnétique opposé dans la voie, de préférence en commandant le champ magnétique horizontal, par exemple en commandant des bobines latérales et des bobines centrales respectives, ce qui ralentit le module, et
annuler le champ magnétique vertical dans la voie, ce qui permet de faire descendre le module sur la voie.

2. Procédé selon la revendication 1, dans lequel, dans une section inclinée de la voie, au moins une série de bobines est inclinée d'un angle α dans le sens de l'inclinaison, en particulier lorsque α est compris entre 0,5 et 2 fois l'angle d'inclinaison, et/ou
dans lequel, dans une section courbe gauche ou droite de la voie, au moins une série de bobines est inclinée vers l'intérieur d'un angle β, en particulier où β est compris entre 0 et 30 degrés par rapport à un plan horizontal, plus particulièrement où β est compris entre 2 et 15 degrés.

3. Procédé selon l'une quelconque des revendications 1 à 2, dans lequel, à une jonction de voies, au moins une série de bobines comprend un insert magnétique, tel qu'un noyau magnétique, l'insert magnétique étant adapté pour se déplacer dans une direction perpendiculaire à une surface de la voie, en particulier par automatisation, fournissant ainsi un gradient magnétique positif ou négatif dans la direction de l'une des voies, en particulier lorsque le gradient magnétique est compris entre 50 et 200 % par rapport à la force magnétique de lévitation.

4. Procédé selon l'une quelconque des revendications 1 à 3, dans lequel, sur une partie rectiligne de la voie, en fonction d'une localisation du module de véhicule, au moins un contrôleur est adapté pour alimenter les bobines situées directement derrière le module de véhicule avec une intensité supérieure de 10 à 50 % à celle des bobines situées sous le module de véhicule, et/ou
au moins un contrôleur est adapté pour alimenter les bobines situées directement devant le module de véhicule avec une intensité inférieure de 1 à 10 % à celle des bobines situées sous le module de véhicule,
par rapport à une direction de déplacement du module de véhicule.

5. Procédé selon l'une quelconque des revendications 1 à 4, dans lequel au moins une fois, deux séries de bobines sont interrompues par au moins l'une d'une plaque électriquement conductrice (14) et d'une plaque à aimant permanent (15), la plaque s'étendant dans une direction longitudinale et une direction de largeur de la voie, et/ou
dans lequel chaque série de bobines est située sous une surface de la voie, et/ou dans lequel au moins une bobine et/ou une partie de celle-ci peut être ou non inclinée par rapport à une perpendiculaire à la surface de la voie, par exemple inclinée de 0 à 40°, de préférence de 2 à 30°, plus préférablement de 5 à 20°.

6. Procédé selon l'une quelconque des revendications 1 à 5, comprenant une caractéristique choisie parmi une série de bobines dont les centres respectifs sont séparés par une distance mutuelle de 1 à 50 cm,
une voie a une largeur de 0,6 à 3 m, et un module de véhicule a une largeur de 0,6 à 3 m, et un module de véhicule a une longueur de 0,6 à 3 m, et un module de véhicule vide a un poids de 150 à 750 kg, par exemple de 200 à 300 kg, ou
une voie a une largeur de 0,05 à 0,3 m, et un module de véhicule a une largeur de 0,03 à 0,4 m, et un module de véhicule a une longueur de 0,05 à 0,4 m, et un module de véhicule vide a un poids de 0,05 à 2 kg, par exemple de 0,1 à 0,5 kg, ou
une voie a une largeur de 0,1 à 1,5 m, et un module de véhicule a une largeur de 0,1 à 1 m, et un module de véhicule a une longueur de 0,1 à 1 m, et un module de véhicule vide a un poids de 4 à 50 kg, par exemple de 10 à 25 kg,
au moins deux modules de véhicule peuvent être reliés,
chaque bobine a une longueur de 1 à 60 cm, de préférence de 2 à 40 cm, par exemple de 10 à 30 cm,
chaque bobine a un rayon de 1 à 20 cm, de préférence de 2 à 10 cm, plus préférablement de 3 à 6 cm,
chaque bobine a une épaisseur de 0,1 à 10 cm, de préférence de 0,2 à 5 cm, plus préférablement de 1 à 3 cm,
chaque bobine, prise individuellement, comporte un nombre de spires n_{c}∈ [1,10000]/m, de préférence compris entre 10 et 5 000, de préférence encore entre 50 et 2 500, par exemple entre 100 et 500,
chaque bobine comprend un matériau électriquement conducteur, tel qu'un métal, par exemple du cuivre ou de l'aluminium,
une série de bobines est adaptée pour fournir un champ magnétique Bz de 10⁻³-10¹ [T], de préférence 5*10⁻³-2 [T], de préférence encore 10 ²-10⁻¹ [T],
sur une largeur de voie de 1 à 100 m, des bobines en série sont prévues,
deux séries de bobines sont séparées par un entraxe respectif de 1 à 20 cm,
un aimant comprend des matériaux à haute densité magnétique,
un aimant comprend au moins un matériau magnétique choisi parmi les éléments des groupes 3 à 12 et des périodes 4 à 6, tels que Fe, Co, Ni et Nd, et des combinaisons de ceux-ci comprenant un tel matériau magnétique, telles que l' le Nd₂ Fe₁₄ B, FePd, FeCo et FePt, et/ou un matériau choisi parmi les lanthanides, le scandium, l'yttrium et leurs combinaisons, tels que Sc, Y, Sm, Gd, Dy, Ho, Er, Yb, Tb, par exemple Tb,
chaque bobine est adaptée individuellement pour recevoir un courant de 0,5 à 200 [A], de préférence de 1 à 100 [A], par exemple de 5 à 50 [A], dans lequel un commutateur est adapté pour commuter en moins de 1 000 µs, de préférence en moins de 100 µs,
au moins un commutateur par bobine individuelle ou par rangée de bobines, et dans lequel chaque bobine est adaptée pour être alimentée en 1 à 10⁵µs, et leurs combinaisons, et/ou
dans lequel chaque bobine ou rangée de bobines est alimentée par des impulsions d'une durée de 1 à 100 ms, la durée d'une impulsion étant de préférence adaptée à la vitesse du module du véhicule, et/ou
dans lequel la vitesse du module de véhicule est comprise entre 0 et 150 m/s, de préférence entre 0 et 75 m/s, plus préférablement entre 0 et 40 m/s, par exemple entre 5 et 30 m/s.

7. Procédé selon l'une quelconque des revendications 1-6, dans lequel au moins l'un des modules du véhicule comprend un réseau d' i∈ [1,p] aimants ayant la même orientation de champ, par exemple disposés en forme de bandes, de sorte que, typiquement, les bandes d'aimants sont alignées dans une direction de déplacement et sont séparées spatialement dans une direction perpendiculaire à la direction de déplacement,
50 à 100 % de la partie inférieure du véhicule est équipée d'aimants,
les aimants ont une hauteur comprise entre 1 et 25 cm, de préférence entre 1,5 et 10 cm, par exemple entre 2 et 5 cm,
la longueur totale de tous les aimants est comprise entre 20 et 200 cm ; de préférence entre 40 et 120 cm, par exemple entre 45 et 100 cm,
les aimants étant disposés au-dessus ou au-dessous du plancher du véhicule, de préférence au-dessous du plancher,
le volume total des aimants étant compris entre 0.1*10⁻³-100*10⁻³ m³, le moment magnétique étant compris entre 0.1-2000 Am²,
dans lequel les bobines fournissent une accélération/décélération de 0,01 à 10 m/s² , de préférence de 0,2 à 5 m/s² , et
dans lequel un mécanisme de freinage supplémentaire fournit une décélération de 1 à 20 m/sec², de préférence de 2 à 10 m/sec².

8. Procédé selon l'une quelconque des revendications 1-7, dans lequel le module de véhicule (20) comprend une base avec des bandes magnétiques, dans lequel un nombre de bandes magnétiques p est égal à un nombre de bobines dans une seule rangée et la largeur de bobine est de préférence de 30 à 90 % d'un diamètre respectif de la bobine, par exemple de 40 à 70 %, et/ou
dans lequel un aimant a une susceptibilité volumétrique comprise entre 10³⁻10⁶.

9. Procédé selon l'une quelconque des revendications 1-8, dans lequel le contrôleur est adapté pour contrôler le survol et la propagation du module de véhicule, et/ou
dans lequel une multitude de modules de véhicule est transférée, et/ou
dans lequel l'infrastructure est partiellement ou entièrement intégrée à une infrastructure existante, dans laquelle au moins une voie, chacune individuellement, est recouverte d'une couche de protection (16), telle qu'une couche polymère d'une épaisseur de 0,2 à 5 cm, de préférence une couche polymère recyclée.

10. Procédé selon l'une quelconque des revendications 1-9, dans lequel l'infrastructure comprend des guides physiques et/ou contrôlables (13), tels qu'un rail, et des bobines de guidage, les bobines de guidage pouvant être orientées en conséquence.

11. Procédé selon l'une quelconque des revendications 1-10, dans lequel le module de véhicule est une monocoque, dans lequel le module de véhicule comprend de préférence au moins un composite, et/ou dans lequel le coefficient de traînée du véhicule C_{D} est inférieur à 0,3, de préférence inférieur à 0,2, par exemple compris entre 0,05 et 0,13, tel qu'un véhicule en forme de goutte, et/ou dans lequel l'impact du module de véhicule lors d'une collision est minimisé.

12. Une infrastructure (10) pour un procédé selon l'une quelconque des revendications 1 à 11, comprenant au moins une voie individuelle (11), dans laquelle chaque voie comprend au moins une série de bobines (12), dans laquelle les séries de bobines s'étendent dans le sens de la largeur de la voie, dans laquelle chaque série de bobines est adaptée pour fournir une force magnétique de lévitation et une force magnétique horizontale, dans laquelle la force magnétique horizontale d'est dirigée dans le sens de la longueur de la voie, dans laquelle les bobines sont placées à distance les unes des autres, au moins un commutateur par série de bobines, dans lequel chaque bobine peut être alimentée individuellement par un courant électrique et mise hors tension, dans lequel, sur au moins un côté de la piste, des bobines latérales sont prévues, adaptées pour fournir un champ magnétique plus important que les bobines centrales situées dans une partie centrale de la piste, par exemple dans lequel les bobines latérales ont un nombre accru d'enroulements par rapport aux bobines centrales, ou dans lequel les bobines latérales comprennent un insert magnétique,
un contrôleur pour alimenter les bobines individuelles de telle sorte qu'un champ magnétique plus important soit généré sur un côté de la voie qu'au niveau d'une partie centrale de la voie,
éventuellement un localisateur de position sur la voie pour module de véhicule, et
une alimentation électrique pour fournir un courant électrique,
en particulier une infrastructure intérieure, telle qu'une infrastructure logistique, ou un circuit de course miniature, un circuit de train miniature, ou un transporteur de plaquettes, ou une infrastructure extérieure, comprenant en outre au moins un élément d'infrastructure tel que mentionné dans les revendications 2 à 11.

13. Infrastructure selon la revendication 12, comprenant une structure tubulaire creuse (17) située sous la chaussée, dans laquelle une surface de la structure tubulaire est constituée d'un matériau polymère (16), tel qu'un plastique, par exemple un plastique recyclé, cette surface étant de préférence fixée de manière amovible, et dans laquelle la structure tubulaire comporte des éléments de réception de bobines (18), tels qu'une crémaillère avec des emplacements de bobines inclinés.

14. Module de véhicule (20) destiné à un procédé selon l'une quelconque des revendications 1-11, dans lequel ledit module de véhicule comprend un réseau d'aimants permanents (21), de préférence sur sa face inférieure (22), éventuellement au moins un siège (23), de préférence 2 à 9 sièges, tels que 3 à 4 sièges, un identifiant (24), et une interface de commande (25) facultative, en particulier comprenant en outre au moins un élément de véhicule tel que mentionné dans les revendications 2-11.

15. Série de bobines pour l'infrastructure selon l'une quelconque des revendications 12 à 13, dans laquelle, dans la série de bobines, les bobines sont adjacentes les unes aux autres, et dans laquelle chaque bobine présente individuellement une forme oblongue avec une largeur (w) et une longueur (l), en particulier dans laquelle la longueur est plus de deux fois supérieure à la largeur.
